# EUROPEAN PATENT SPECIFICATION

(11) **EP 3 070 140 B1**
(45) Date of publication and mention of the grant of the patent: **28.04.2021**
(21) Application number: 14862394.5
(22) Date of filing: 11.11.2014
(51) Int. Cl.: F16D 69/02, F16D 69/00

(54) **METHOD OF MAKING A FRICTION MATERIAL**
VERFAHREN ZUR HERSTELLUNG EINES REIBUNGSMATERIALS
PROCÉDÉ DE FABRICATION D'UN MATÉRIAU DE FRICTION

(30) Priority: 12.11.2013 JP 2013234271
(43) Date of publication of application: 21.09.2016
(73) Proprietor: Akebono Brake Industry Co., Ltd., Tokyo 103-8534 (JP)
(72) Inventor: HANAIE Yuji, Tokyo 103-8534 (JP); SEKI Katsuji, Tokyo 103-8534 (JP); SUGAI Yoshiyuki, Tokyo 103-8534 (JP); MIYAJI Motoyuki, Tokyo 103-8534 (JP)
(74) Representative: Grünecker Patent- und Rechtsanwälte PartG mbB
(86) International application number: PCT/JP2014/079821
(87) International publication number: WO 2015/072445

(56) References cited:
- EP-A1- 2 439 247
- WO-A1-2004/069954
- JP-A- H09 151 367
- JP-A- H09 151 367
- JP-A- H10 130 628
- JP-A- S57 167 377
- JP-A- 2000 191 800
- JP-A- 2000 205 318
- JP-A- 2000 256 650
- JP-A- 2001 181 607
- JP-A- 2004 501 271
- JP-A- 2007 326 999
- US-A- 4 847 135
- US-A- 5 516 587

## Description

### Technical Field

The present invention relates to a method for producing a friction material. More specifically, the present invention relates to a method for producing a friction material capable of reducing squeal (brake noise) after leaving a friction material in a cold environment.

### Background Art

Conventionally, a friction material such as brake is produced by using a fiber base material, a friction modifier and a binder, blending them, and performing a production process including steps such as preforming, thermoforming and finishing. In the friction material such as brake, a fiber base material, e.g., an organic fiber such as aramid fiber, an inorganic fiber such as glass fiber, or a metal fiber such as copper fiber, an organic friction modifier such as rubber dust and cashew dust, an inorganic friction modifier such as calcium carbonate, barium sulfate, metal particle, ceramic particle and graphite, and a binder such as phenol resin, are used.

The fiber base material forming the framework of a friction material supplements the strength, heat resistance and wear resistance of the friction material, and among metal fibers to be used as the fiber base material, a copper fiber is soft and highly ductile, leading to excellent formability, and therefore, the copper fiber is generally used. The copper fiber has a function of diffusing heat generated on the frictional surface due to its high thermal conduction during friction braking and in turn, enhancing the fade resistance. The copper fiber is sometimes used in the powder form, i.e., as a copper powder.

A fading phenomenon is caused by a decomposition gas generated resulting from decomposition of an organic substance contained in the friction material upon exposure of the friction material to high temperature and high load, and when copper having large thermal conductivity is added to the friction material, the heat radiation property of the friction material itself is increased, so that the generation of decomposition gas can be suppressed.

It has been heretofore disputed whether the friction material could achieve both of assurance of braking property and enhancement of anti-squeal performance or fading resistance. In order to improve the anti-squeal performance, for example, Patent Document 1 describes a technique of using, for a brake disc pad, a friction material having blended therein a fluorine-based polymer such as polytetrafluoroethylene (PTFE), fluorinated ethylene propylene (FEP) and polyvinylidene fluoride (PVDF). In addition, each of Patent Documents 2 and 3 describes a friction material composition containing an active alumina as an inorganic friction modifier and a fluorine-based polymer as an organic friction modifier, and a friction material using the friction material composition.

Brake noise is generated under various conditions, but particularly when low-speed braking with low deceleration is performed after leaving the friction material under low-temperature and high-humidity conditions, the friction material generates squeal. For example, when we start an automobile parked overnight in the morning and a first braking is performed, a squeal is likely to be generated.

As a technique for reducing such squeal of a friction material after leaving it under low-temperature and high-humidity conditions, Patent Document 4 describes a technique of blending, in a friction material composition, a fibrous fluorine-based polymer fiber having a fiber diameter of 5 µm to 30 µm and a fiber length of 0.5 mm to 80 mm in order to obtain a friction material in which the change in brake output between the case at low temperature and the case at high temperature is lessened and noise generation at low temperature is reduced.

On the other hand, in the case of a friction material containing a heavy metal such as copper, the heavy metal is released as wear debris into air due to braking, and its impact on the natural environment is pointed out. With such concern, a friction material containing no heavy metal such as copper has been developed, and a move toward removing a heavy metal is recently accelerated on an international basis. As a friction material in which copper is substantially removed, for example, Patent Document 5 describes a non-asbestos friction material containing neither a heavy metal nor a heavy metal compound and containing graphite and coke in an amount of 5% by volume to 25% by volume in total.

Patent Document 6 describes a friction material composition, a friction material obtained from the same and a friction member. The material composition comprises a binder, a fibrous base material, an abrasive material, an inorganic filler, and an organic filter. The composition is less destructive to facing materials compared to conventional products, has a high friction coefficient upon braking when used in repeated braking, and which is capable of suppressing pad wear.

Patent Document 7 describes a composite material for sliding surface bearings, which provides a rough metallic surface with a polymeric matrix, which forms a friction contact or sliding layer over the rough base surface. Wear resistance is increased by including zinc sulfide and/or barium sulfate in the matrix.

Patent Document 8 discloses a wet multiplate system clutch plate coated with a phenolic resin mixture to achieve a friction member having a high frictional force, a small frictional force fluctuation and excellent wear resistance. Carbon fiber or aromatic polyamide fiber, a solid lubricant, at least one wear resistant material, and at least one soft organic compound are also part of the composition.

Patent Document 9 describes a non-asbestos friction material comprising a base fiber, fluorocarbon resin powder, a thermosetting resin, a filler, and a rubber material. The friction material is designed for use in friction washers for automobiles

### Prior Art Documents

### Patent Documents

Patent Document 1: JP-T-2004-501271 (the term "JP-T" as used herein means a published Japanese translation of a PCT patent application)
Patent Document 2: JP-A-2011-17016
Patent Document 3: WO 2004/001162
Patent Document 4: JP-A-H08-326805
Patent Document 5: JP-A-2008-179806
Patent Document 6: EP 2 439 247 A1
Patent Document 7: US 4 847 135 A
Patent Document 8: US 5 516 587 A
Patent Document 9: JP-A-H09-151367

### Summary of the Invention

### Problems That the Invention is to Solve

In such a copper-free friction material containing no copper, even when a fluorine-based polymer fiber is used as in Patent Document 4 in order to solve the squeal problem of the friction material after leaving it at low temperature, a lubricating function due to malleability and ductility of copper is not provided and therefore, if the friction material absorbs moisture after leaving it in a cold environment, the friction coefficient increases, and the squeal is readily generated. In addition, since copper is not contained, the thermal conductivity lowers, and the formability of the friction material is reduced. Reduction in the formability may bring about a decrease in the strength of the friction material and an adverse change in the wear amount during the use. Furthermore, since the fluororesin fiber exhibits poor wettability with a phenol resin, an increase in the amount thereof is disadvantageous for the formability of the friction material.

Accordingly, with respect to a friction material composition containing neither copper nor a copper-containing metal and a friction material using the composition, a problem to be solved by the present invention is to provide a method for producing a friction material in which an increase in the friction coefficient after leaving it in a cold environment is suppressed and not only the wear resistance is enhanced but also the noise resistance and brake output for fitting to a wide range of vehicle types are improved.

### Means for Solving the Problems

As a result of intensive studies to solve the above-described problem, the present inventors have found that, with regard to a method for producing a copper-free friction material, when a fluorine-based polymer particle is contained in a friction material composition, a friction material having good thermoformability can be obtained due to enhanced dispersibility of the fluorine-based polymer particle in the friction material composition, and the obtained friction material provides stable friction coefficient and wear resistance and can reduce squeal after leaving it in a cold environment. The present invention has been accomplished based on this finding. The generation of squeal after leaving the friction material in a cold environment is caused by intrusion of water in air into a pore of the friction material. It is considered that when a fluorine-based polymer powder is blended, the water repellent function of the powder produces an effect of preventing water from being absorbed in a pore of the friction material. In addition, the fluorine-based polymer powder is likely to be uniformly dispersed in the friction material, as compared with the case of a fluorine-based fiber, and therefore, the expected effect is obtained even when a small amount thereof is used. Furthermore, the amount of the fluorine-based polymer powder to be used is small relative to the case of the fluororesin fiber, so that formability can also be ensured.

That is, the present invention could be achieved by the following (1).
(1) A method for producing a friction material, comprising thermoforming a friction material composition under a thermoforming surface pressure of 50 MPa to 70 MPa at 140°C to 170°C for 3 minutes to 10 minutes, wherein the friction material composition comprises a fiber base material, a binder and a friction modifier and further comprises a fluorine-based polymer particle having an average particle diameter of 0.5 µm to 8 µm,the content of copper in the friction material composition is 0.5% by mass or less, and the content of the fluorine-based polymer particle is from 0.2% by mass to 3.5% by mass.

### Advantageous Effects of the Invention

A method for producing a friction material provides a friction material formed from the friction material composition in the present invention, which, when used as a friction material such as disc brake pad or brake lining for automobiles, imposes a small environmental load because of substantially no presence of copper in the wear debris to be produced during braking, exerts stable friction coefficient, noise resistance and wear resistance, and can maintain the squeal characteristics of the friction material after leaving it in a cold environment at the same level as that of a friction material containing copper.

### Mode for Carrying Out the Invention

The mode for carrying out the present invention is described in detail below, but the following embodiment is only illustrative, and the present invention is not limited thereto.

In the present invention, the "copper-free" means that a copper component is not substantially contained in the friction material and specifically indicates that the content of the copper component is 0.5% by mass or less based on the whole amount of the friction material composition.

In this description, the "mass" means "weight".

The friction material composition used in the method for producing a friction material in the present invention contains a fiber base material, a binder and a friction modifier, in which a content of copper in the friction material composition is 0.5% by mass or less and the friction material composition contains a fluorine-based polymer particle.

The fiber base material is used for reinforcement of a friction material to be produced and as the fiber base material, for example, a heat-resistant organic fiber, an inorganic fiber, or a metal fiber is used. Examples of the heat-resistant organic fiber include an aromatic polyamide fiber (aramid fiber) and a flame-resistant acrylic fiber; examples of the inorganic fiber include a potassium titanate fiber and a ceramic fiber (biosoluble fibers are preferably used), a glass fiber, a carbon fiber, a rock wool and the like; and examples of the metal fiber include a steel fiber. These may be used individually or in combination of two or more kinds thereof. In order to ensure sufficient mechanical strength, the content of the fiber base material is preferably from 1% by mass to 15% by mass, more preferably from 2% by mass to 10% by mass, based on the whole amount of the friction material composition.

The binder is composed of a thermosetting resin, and examples of the thermosetting resin include a phenol resin, an epoxy resin, a resin obtained by modifying such a thermosetting resin with cashew oil, silicone oil, various elastomers, etc., and a resin obtained by dispersing, in the thermosetting resin above, various elastomers, a fluorine-based polymer, etc. These may be used individually or in combination of two or more kinds thereof. In order to ensure sufficient mechanical strength and wear resistance, the content of the binder is preferably from 7% by mass to 12% by mass, more preferably from 8% by mass to 11% by mass, based on the whole amount of the friction material composition.

The fluorine-based polymer for use in the present invention is used as a friction modifier and may be a homopolymer of tetrafluoroethylene (TFE) or may be a copolymer with a copolymerizable monomer except for TFE, such as fluorine-containing monomer having an ethylenically unsaturated group. Some fluorine-based polymers have a molecular weight of several million, and a polymer in any form such as granular, plate-like or amorphous shape may be appropriately used, but the fluorine-based polymer is usually used in the powder form.

Accordingly, the fluorine-based polymer as used in the present invention encompasses not only a homopolymer of TFE (PTFE) but also a modified polytetrafluoroethylene that is modified by copolymerizing other monomer(s) in such a small amount as not imparting melt flowability.

Examples of the fluorine-containing monomer having an ethylenically unsaturated group include hexafluoropropylene, perfluorobutene-1, perfluorohexene-1, perfluorononene-1, perfluoro(methyl vinyl ether), perfluoro(ethyl vinyl ether), perfluoro(propyl vinyl ether), perfluoro(heptyl vinyl ether), (perfluoromethyl)ethylene, (perfluorobutyl)ethylene, and chlorotrifluoroethylene. Among them, hexafluoropropylene, perfluoro(n-propyl vinyl ether) and (perfluoro-n-butyl)ethylene are preferred. These fluorine-containing monomers may be used individually or in combination of two or more kinds thereof. The amount of the copolymerizable monomer is, usually, preferably 1 mol% or less, more preferably 0.5 mol% or less.

Among the fluorine-based polymers for use in the present invention, polytetrafluoroethylene (PTFE, melting point: 327°C) is preferred.

The fluorine-based polymer particle for use in the present invention can be usually produced by suspension polymerization. The suspension polymerization can be performed by using TFE alone or using TFE and a copolymerizable monomer, in an aqueous medium containing a dispersant and a polymerization initiator. The polymerization temperature is usually from 50°C to 120°C, preferably from 60°C to 100°C. The polymerization pressure may be appropriately selected.

The fluorine-based polymer particle for use in the present invention is obtained by pulverizing the particle having an average particle diameter of several mm obtained by the suspension polymerization. In particular, when a polytetrafluoroethylene (hereinafter, referred to as PTFE) powder having an average particle diameter of about 20 µm or less is pulverized and classified, the fluorine-based polymer particle can be easily adjusted to have a desired particle diameter. In the present invention, a fluorine-based polymer particle having an average particle diameter of 0.5 µm to 8 µm is used. If the average particle diameter exceeds 10 µm, the effect on the blending amount is reduced, and thus, a fluorine-based polymer particle having an average particle diameter of 10 µm or less is preferably used.

The blending amount of the fluorine-based polymer particle for use in the present invention is from 0.2% by mass to 3.5% by mass, more preferably from 0.2% by mass to 3.0% by mass, based on the whole amount of the friction material composition. When the fluorine-based polymer particle is blended so as to fall within the range above, the friction coefficient after leaving the friction material in a cold environment can be restrained from rising, and the squeal can be advantageously reduced.

In the friction material composition, used in the method for producing a friction material in the present invention, materials usually employed are used as long as the gist of the present invention is observed. Specifically, examples of other friction modifiers include an organic filler such as cashew dust, rubber dust (pulverized powder of tire tread rubber), various unvulcanized rubber particles and various vulcanized rubber particles, an inorganic filler such as barium sulfate, calcium carbonate, calcium hydroxide, vermiculite, mica, plate-like potassium titanate, scale-like lithium potassium titanate or magnesium potassium titanate, and amorphous potassium titanate, an abrasive such as silicon carbide, alumina, magnesia, chromite, triiron tetroxide, zirconium oxide and zirconium silicate, a lubricant such as molybdenum disulfide, tin sulfide, zinc sulfide and iron sulfide, and a non-ferrous metal particle other than copper and a copper alloy, such as zinc powder and tin powder. These may be used individually or in combination of two or more thereof. The content of the friction modifier may be appropriately adjusted according to the desired frictional properties. The content of the friction modifier is, according to the desired friction coefficient, preferably from 60% by mass to 90% by mass, more preferably from 65% by mass to 85% by mass, based on the whole amount of the friction material.

In addition, other blending materials may be used, if desired.

The production of a friction material using the friction material composition in the present invention may be performed by a usual production process, but the friction material is preferably produced by setting the surface pressure high during thermoforming. Specifically, the friction material can be produced through steps of mixing of raw materials, preforming, thermoforming, heating, grinding, etc. A powdered mixture obtained by mixing raw materials by a blender, etc. is put in a preforming mold and preformed, and the preformed body is put in a thermoforming mold and a metal plate is laminated thereon, followed by thermoforming under a thermoforming surface pressure higher by 10% to 40% than usual cases, specifically, at 50 MPa to 70 MPa, preferably from 55 MPa to 70 MPa, more preferably from 55 MPa to 65 MPa. When the thermoforming surface pressure falls within the range above, a frictional strength comparable to that of a conventional product can be ensured. The thermoforming temperature is preferably from 140°C to 170°C, and the thermoforming time is preferably from 3 minutes to 10 minutes.

### Examples

The present invention is described more specifically below by referring to Examples, but the scope of the present invention is not limited only to these Examples.

### [Test Example 1]

### (Examples 1 to 6 and Comparative Examples 1 to 3)

### <Production of Friction Material>

The blending materials shown in Table 1 were collectively put in a mixing stirrer, followed by mixing at room temperature for 2 minutes to 10 minutes, thereby obtaining a friction material composition. Each of the obtained friction material compositions was processed through steps of preforming (1), thermoforming (2), heating and firing (3), etc., thereby preparing a friction material.

### (1) Preforming

The friction material composition above was put in the mold for preforming press, followed by forming at room temperature under 20 MPa for 5 seconds, thereby preparing a preformed article (sample size: 45×80 mm).

### (2) Thermoforming

This preformed article was put in a thermoforming mold, and a metal plate (pressure plate: P/P) previously coated with an adhesive was laminated thereon, followed by thermoforming at 150°C under 50 MPa for 5 minutes.

### (3) Heating and Firing

This thermoformed product was heat-treated at 250°C for 2 hours and grinding was performed so as to have a predetermined thickness of 15.5 mm. Subsequently, the surface of the thermoformed product was subjected to a scorching treatment, followed by finishing coating, thereby obtaining a friction material (brake pad).

### <Friction Material Evaluation Test>

Using the prepared friction materials of Examples 1 to 6 and Comparative Examples 1 to 3, evaluation of formability of the friction material, general performance test, wear amount of friction material, and squeal test were performed. The evaluation results obtained are shown in Table 1.

### (1) Evaluation of Formability of Friction Material

The thermoformed product was measured for the hardness on an HRS scale by means of a Rockwell hardness meter at predetermined 4 points in total, i.e., 2 points on the outer circumference and 2 points on the inner circumference, where the hardness could be usually measured.

An average value of the hardness at the 4 measured potions above was calculated, and when the average value had a variation within ±20% relative to the preset target hardness value, the sample was rated as "A". Furthermore, the sample was rated as "B" when the variation of the average value is more than 20% and 30% or less, and rated as "C" when the variation exceeds 30%. Although a sample rated as "C" in this evaluation was formable, the friction material was soft and insufficient in the strength and was judged to be incapable of withstanding a friction test, and therefore, such a sample was not subjected to the friction test evaluation.

### (2) General Performance Test

In conformity with JASO·C406, µ at the time of second effect with 2.94 m/s² and 5.88 m/s² at 50 km/h and 100 km/h, respectively, was defined as µ in the normal region.

### (3) Measurement of Wear Amount of Friction Material

The thickness of the friction material (brake pad) was measured by a micrometer before and after carrying out the general performance test above, and the thickness difference therebetween was calculated as the wear amount.

### (4) Squeal Test

A squeal test was carried out under the following conditions by using a dynamo tester, and the squeal generation rate was evaluated.

### <Ambient Condition: temperature: 10°C, humidity: 40%>

Burnishing: 200 times at 65 km/h, 3.43 m/s² and 120°C
Matrix: once under each of the conditions of 10 km/h, 20 km/h and 30 km/h, 0.98 m/s², 1.96 m/s² and 2.94 m/s², and 50°C to 200°C (rise or drop in steps of 50°C)

### <Ambient Condition: temperature: 10°C, humidity: 80%>

Leaving: 4 hours
Braking: 3 times at 10 km/h and 0.98 m/s²

These tests were carried out 10 cycles in total. However, burnishing after second cycle was changed to 35 times. The sample was rated as "A" when the squeal generation rate was 5% or less, rated as "B" when it was more than 5% and less than 10%, and rated as "C" when it was 10% or more.

**Table 1**

| | | | | Example | | | | | | Comparative Example | | |
|---|---|---|---|---|---|---|---|---|---|---|---|---|
| | | | | 1 | 2 | 3 | 4 | 5 | 6 | 1 | 2 | 3 |
| Blending composition (% by mass) | Fiber base material | Aramid fiber | | 5.0 | | | | | | | | |
| | | Copper fiber | | 0.0 | | | | | | | | |
| | | Biosoluble inorganic fiber | | 5.0 | | | | | | | | |
| | Binder | Phenol resin | | 9.0 | | | | | | | | |
| | Friction modifier | PTFE powder (average particle diameter: 4 µm) | | 0.2 | 0.5 | 1.0 | 2.0 | 3.0 | 3.5 | 0.0 | 0.0 | 0.0 |
| | | PTFE fiber (average fiber length: 5 mm) | | 0.0 | 0.0 | 0.0 | 0.0 | 0.0 | 0.0 | 0.0 | 1.0 | 5.0 |
| | | Cashew dust | | 5.0 | | | | | | | | |
| | | Rubber dust | | 4.5 | | | | | | | | |
| | | Barium sulfate | | 24.3 | 24.0 | 23.5 | 22.5 | 21.5 | 21.0 | 24.5 | 23.5 | 19.5 |
| | | Plate-like potassium titanate | | 24.0 | | | | | | | | |
| | | Chromite | | 0.5 | | | | | | | | |
| | | Triiron tetroxide | | 8.0 | | | | | | | | |
| | | Graphite | | 7.0 | | | | | | | | |
| | | Calcium hydroxide | | 3.0 | | | | | | | | |
| | | Tin sulfide | | 1.5 | | | | | | | | |
| | | Mica | | 1.5 | | | | | | | | |
| | | Zinc powder | | 1.5 | | | | | | | | |
| | Total (% by mass) | | | 100.0 | | | | | | | | |
| Thermoforming surface pressure [MPa] | | | | 50 | | | | | | | | |
| Friction material formability | | | | A | A | A | A | A | A | A | B | C |
| Friction test | JASO Performance, second effect | 50 km/h | 2.94 m/s² | 0.34 | 0.33 | 0.32 | 0.31 | 0.30 | 0.29 | 0.35 | 0.36 | incapable of evaluation |
| | | | 5.88 m/s² | 0.33 | 0.33 | 0.32 | 0.30 | 0.30 | 0.28 | 0.35 | 0.35 | |
| | | 100 km/h | 2.94 m/s² | 0.37 | 0.36 | 0.35 | 0.34 | 0.32 | 0.29 | 0.38 | 0.39 | |
| | | | 5.88 m/s² | 0.36 | 0.35 | 0.35 | 0.32 | 0.31 | 0.29 | 0.37 | 0.38 | |
| | Wear amount of pad after JASO performance test [mm] | | | 0.74 | 0.70 | 0.68 | 0.65 | 0.63 | 0.61 | 0.78 | 1.15 | |
| | Score of squeal generation rate | | | B | A | A | A | A | A | c | c | |

It has been found from the results in Table 1 that, with regard to the copper-free friction material, in Comparative Example 1 not containing PTFE particle, the wear amount of the friction material was as large as 0.78 mm and the score in the evaluation of squeal generation rate was 10% or more, whereas in Examples 1 to 6 containing a PTFE particle, the wear amount of the friction material is small as compared with Comparative Example 1 and the score in the evaluation of squeal generation rate was excellent. In Comparative Examples 2 and 3 using a PTFE fiber, the formability was seriously reduced. In addition, in Comparative Example 2, the reduction of the formability is considered to have brought about a decrease in the friction material strength and an increase in the wear amount, as compared with Examples 1 to 6. Furthermore, in Comparative Example 2, the effect on squeal was not obtained, as compared with Examples 1 to 6.

### [Test Example 2]

### (Examples 7 to 10 and Comparative Example 4)

### <Production of Friction Material>

Friction materials were produced by using the blending materials shown in Table 2 by the same method as in Test Example 1, but the thermoforming surface pressure in thermoforming (2) was changed so as to fall within the range of 50 MPa to 70 MPa.

### <Friction Material Evaluation Test>

Using the prepared frictions materials of Examples 7 to 10 and Comparative Example 4 and the friction material of Example 2 prepared in Test Example 1, general performance test, measurement of wear amount of friction material, and squeal test were performed. The test methods are the same as in Test Example 1. The evaluation results obtained are shown in Table 2.

**Table 2**

| | | | | Example | | | | | Comparative Example 4 |
|---|---|---|---|---|---|---|---|---|---|
| | | | | 2 | 7 | 8 | 9 | 10 | |
| Blending composition (% by mass) | Fiber base material | Aramid fiber | | 5.0 | | | | | |
| | | Copper fiber | | 0.0 | 0.0 | 0.0 | 0.0 | 0.0 | 10.0 |
| | | Biosoluble inorganic fiber | | 5.0 | | | | | |
| | Binder | Phenol resin | | 9.0 | | | | | |
| | Friction modifier | PTFE powder (average particle diameter: 4 µm) | | 0.5 | 0.5 | 0.5 | 0.5 | 0.5 | 0.0 |
| | | Cashew dust | | 5.0 | | | | | |
| | | Rubber dust | | 4.5 | | | | | |
| | | Barium sulfate | | 24.0 | 24.0 | 24.0 | 24.0 | 24.0 | 14.5 |
| | | Plate-like potassium titanate | | 24.0 | | | | | |
| | | Chromite | | 0.5 | | | | | |
| | | Triiron tetroxide | | 8.0 | | | | | |
| | | Graphite | | 7.0 | | | | | |
| | | Calcium hydroxide | | 3.0 | | | | | |
| | | Tin sulfide | | 1.5 | | | | | |
| | | Mica | | 1.5 | | | | | |
| | | Zinc powder | | 1.5 | | | | | |
| | Total (% by mass) | | | 100.0 | | | | | |
| Thermoforming surface pressure [MPa] | | | | 50 | 55 | 60 | 65 | 70 | 50 |
| Friction test | JASO Performance, second effect | 50 km/h | 2.94 m/s² | 0.33 | 0.32 | 0.32 | 0.31 | 0.30 | 0.35 |
| | | | 5.88 m/s² | 0.33 | 0.33 | 0.33 | 0.31 | 0.28 | 0.35 |
| | | 100 km/h | 2.94 m/s² | 0.36 | 0.36 | 0.35 | 0.34 | 0.30 | 0.39 |
| | | | 5.88 m/s² | 0.35 | 0.35 | 0.34 | 0.32 | 0.28 | 0.39 |
| | Wear amount of pad after JASO performance test [mm] | | | 0.70 | 0.61 | 0.54 | 0.48 | 0.45 | 0.48 |
| | Score of squeal generation rate | | | A | A | A | A | A | A |

It has been found from the results in Table 2 that when the surface pressure during thermoforming is raised by 10 to 40% (Examples 7 to 10), the squeal is improved and the strength of the friction material, i.e., wear resistance, substantially comparable to that of Comparative Example 4 containing copper, can be ensured.

This application is based on Japanese Patent Application No. 2013-234271 filed on November 12, 2013.

### Industrial Applicability

The method for producing a friction material wherein the friction material composition in the present invention, when used for a friction material such as disc brake pad and brake lining, imposes a small environmental load because of substantially no presence of copper in the wear debris produced during braking, provides a friction material, which exerts stable friction coefficient, noise resistance and wear resistance, and in particular can reduce squeal after leaving the friction material in a cold environment. Accordingly, a method for producing a friction material formed by molding the friction material composition in the present invention provides a friction material, which is suitable for a brake pad, etc. of an automobile.

## Claims

1. A method for producing a friction material, comprising thermoforming a friction material composition under a thermoforming surface pressure of 50 MPa to 70 MPa at 140°C to 170°C for 3 minutes to 10 minutes, wherein the friction material composition comprises a fiber base material, a binder and a friction modifier and further comprises a fluorine-based polymer particle having an average particle diameter of 0.5 µm to 8 µm, the content of copper in the friction material composition is 0.5% by mass or less, and the content of the fluorine-based polymer particle is from 0.2% by mass to 3.5% by mass.

## Patentansprüche

1. Verfahren zum Herstellen eines Reibmaterials, umfassend das Thermoformen einer Reibmaterialzusammensetzung über 3 Minuten bis 10 Minuten hinweg bei 140 °C bis 170 °C unter einem Thermoformungs-Flächendruck von 50 MPa bis 70 MPa, wobei die Reibmaterialzusammensetzung ein Faser-Basismaterial, ein Bindemittel und ein Reibungsmodifizierungsmittel umfasst und ferner ein Polymerteilchen auf Fluorbasis mit einem mittleren Teilchendurchmesser von 0,5 µm bis 8 µm umfasst, der Kupfergehalt in der Reibmaterialzusammensetzung 0,5 Massen-% oder weniger beträgt und der Gehalt des Polymerteilchens auf Fluorbasis 0,2 Massen-% bis 3,5 Massen-% beträgt.

## Revendications

1. Procédé de production d'un matériau de friction, comprenant le thermoformage d'une composition de matériau de friction sous une pression superficielle de thermoformage de 50 MPa à 70 MPa à une température de 140 °C à 170 °C pendant 3 minutes à 10 minutes, la composition de matériau de friction comprenant un matériau à base de fibres, un liant et un modificateur de friction et comprenant, en outre, une particule de polymère à base de fluor ayant un diamètre de particule moyen de 0,5 µm à 8 µm, la teneur en cuivre dans la composition de matériau de friction étant de 0,5 % en masse ou moins, et la teneur en particule de polymère à base de fluor allant de 0,2 % à 3,5 % en masse.
